# EUROPÄISCHE PATENTANMELDUNG

(11) **EP 4 782 190 A1**
(43) Veröffentlichungstag der Anmeldung: **29.07.2026**
(21) Anmeldenummer: 26153504.1
(22) Anmeldetag: 22.01.2026
(51) Int. Cl.: B29C 70/44, B29C 33/10, B29C 70/54, B29C 51/36

(54) **FORMWERKZEUG UND VERFAHREN ZUR HERSTELLUNG VON FASERVERBUNDWERKSTOFFKOMPONENTEN MIT EINEM SOLCHEN FORMWERKZEUG**

(30) Priorität: 23.01.2025 DE 102025102418
(71) Anmelder: Deutsches Zentrum für Luft- und Raumfahrt e.V., 53227 Bonn-Oberkassel (DE)
(72) Erfinder: BECK, Roman Rainer, 38108 Braunschweig (DE); BOOSE, Yannick, 38108 Braunschweig (DE); PRUSSAK, Robert, 38108 Braunschweig (DE); KOORD, Josef, 38108 Braunschweig (DE); SÄMANN, Philipp, 38108 Braunschweig (DE)
(74) Vertreter: Gerstein, Hans Joachim

(57) **Zusammenfassung**

Ein Formwerkzeug (1) zur Herstellung von Faserverbundwerkstoffkomponenten wird beschrieben, mit:
- einem Träger (2), der eine Bodenplatte (9) und einen Absauganschluss (7) zum Anschluss einer Absaugeinheit (11) hat,
- einem Formeinsatz (3), der auf der Bodenplatte (9) lagerbar ist, wobei der Formeinsatz (3) eine formgebende Kontur hat, und
- einer an dem Träger (2) gelagerten Membran (5).

Eine Übergangsstruktur (4) ist zwischen dem Formeinsatz (3) und dem Kontaktbereich der Membran (5) mit dem Träger (2) angeordnet, die aus aneinander geschichteten Lagen von plattenförmigen Stützelementen (6) gebildet ist. Die Übergangsstruktur (4) weist eine sich an die Formoberfläche des Formeinsatzes (3) anschließende Auflageebene für die Membran (5) und Luftführungskanäle (8) im Zwischenraum zwischen jeweils aneinander gestapelten Lagen der plattenförmigen Stützelemente (6) und/oder in den plattenförmigen Stützelementen (6) auf.

## Beschreibung

Die Erfindung betrifft ein Formwerkzeug zur Herstellung von Faserverbundwerkstoffkomponenten mit:
- einem Träger, der eine Bodenplatte und einen Absauganschluss zum Anschluss einer Absaugeinheit hat,
- einem Formeinsatz, der auf der Bodenplatte lagerbar ist, wobei der Formeinsatz eine formgebende Kontur hat, und
- einer an dem Träger gelagerten Membran.

Die Erfindung betrifft weiterhin ein Verfahren zur Herstellung von Faserverbundwerkstoffkomponenten mit einem solchen Formwerkzeug.

DE 10 2023 128 415 A1 beschreibt ein Formwerkzeug zur Herstellung von Faserverbundwerkstoffkomponenten mit einem Rahmen und/oder einem aus mindestens einem Seitenhalteelement gebildeten Halterahmen und mit einem Formeinsatz, der eine formgebende Kontur aufweist. Der Formeinsatz ist aus aneinander geschichteten Lagen von plattenförmigen Stützelementen gebildet. Der Formeinsatz ist mit einer Formschicht abdeckbar und der Faserverbundwerkstoff ist auf der Formschicht auflegbar. Die aus dem Faserverbundwerkstoff gebildete Faserverbundwerkstoffkomponente ist mit der formgebenden Kontur des Formeinsatzes abformbar.

JP 2006 264 163 A offenbart die Bereitstellung einer Vakuumformform mit vielen Evakuierungskanälen und optionalen zusätzlichen Kanälen zur Kühlung, die kostengünstig und in kurzer Zeit herstellbar ist. Die Vakuumformform wird durch Laminieren, Verbinden und Bearbeiten einer Vielzahl von Metallblechen gebildet. Sie besteht aus einer Vielzahl von Metallblechen, die laminiert sind und den Hohlraum und die Evakuierungskanäle bilden, die aus den Spalten der Verbindungsflächen zwischen dem Metallblech und dem Metallblech gebildet werden, die den Hohlraum bilden.

DE 10 2023 106 384 A1 offenbart ein Werkzeug zum Herstellen eines warmumgeformten Faserverbundbauteils, das eine Umformwanne, ein in der Umformwanne angeordnetes Umformwerkzeug zum Auflegen einer Preform, und einen eine elastische Membran tragenden Spannrahmen mit einer unteren Begrenzungsfläche zum Auflegen auf eine obere Begrenzungsfläche des Randes aufweist. Die Umformwanne hat einen Boden, einen umlaufenden Rand und eine von dem Boden abgewandte Wannenöffnung, die durch den Rand begrenzt ist. Der Rand und der Spannrahmen sind dazu ausgebildet, eine fluiddichte Verbindung miteinander herzustellen, sodass die Umformwanne mit aufgelegtem Spannrahmen durch Absaugen von Luft durch einen in der Umformwanne angeordneten Sauganschluss evakuierbar ist. Die Membran ist dazu ausgebildet, sich beim Evakuieren der Umformwanne in Richtung des Bodens der Umformwanne auf eine in der Umformwanne befindliche Preform und benachbarte, freie Bodenbereiche zu schmiegen, so dass die Preform auf das Umformwerkzeug gepresst wird.

DE 10 2014 001 445 A1 offenbart eine Vorrichtung zur Herstellung von Rotorblattschalen unterschiedlicher Größe und Form in Negativformen unter Verwendung einer Vakuumtechnologie. In einem Grundkörper ist eine wannenförmige, nach oben offene Ausnehmung angeordnet. Die Ausnehmung ist größer als die Länge, Breite und Höhe der zu formenden Rotorblattschalen. In der wannenförmigen Ausnehmung sind auswechselbare Formabschnitte abstandslos mit forminnenseitig glatten Übergängen und nach oben offen angeordnet. Die Summe der Formabschnitte bildet forminnenseitig die Negativform der Rotorblattschale aus. Der Grundkörper ist zur Herstellung eines Vakuums unter Beibehaltung von mindestens einer Öffnung zum Einbringen von aushärtendem Rotorblattwerkstoff verschließbar.

Umformverfahren für Faserverbundkunststoffe werden typischerweise mit dem Membranverfahren durchgeführt. Dabei liegt ein entlüfteter, unausgehärteter Lagenstapel (vorgetränkt, d.h. "pre-inpregnated", oder Trockenfaser mit anschließenderr Infusion) auf einem Formwerkzeug. Die Kavität um Lagenstapel und Formwerkzeug wird von einer Rahmenkonstruktion und einer Membran luftdicht verschlossen und evakuiert. Dadurch formen sich Membran und Lagenstapel an das Formwerkzeug an. Da sich zwischen der Membran und der abzuformenden Geometrie bzw. der Grundfläche keine Struktur, sondern nur Luft befindet, muss die Membran teilweise große Dehnungen ermöglichen, um die Übergänge zwischen dem Formwerkzeug und der Grundfläche abzubilden.. Die Übergänge können spitze Winkel etc. sein. Dadurch kommen sehr große Membranflächen zum Einsatz, um große Gesamtdehnungen möglich zu machen. Dies bedarf jedoch großer Membranflächen und damit einen hohen Materialbedarf und großer Grundflächen und damit erhöhten Platzbedarf in der Fertigung für die Umformung

Ausgehend hiervon ist es Aufgabe der vorliegenden Erfindung, ein verbessertes Formwerkzeug und ein Verfahren zur Herstellung von Faserverbundwerkstoffkomponenten mit einem solchen Formwerkzeug zu schaffen.

Die Aufgabe wird mit dem Formwerkzeug mit den Merkmalen des Anspruchs 1 und durch das Verfahren mit den Merkmalen des Anspruchs 17 gelöst. Vorteilhafte Ausführungsformen sind in den Unteransprüchen beschrieben.

Es wird vorgeschlagen, dass eine Übergangsstruktur zwischen dem Formeinsatz und dem Kontaktbereich der Membran mit dem Träger angeordnet ist, die aus aneinander geschichteten Lagen von plattenförmigen Stützelementen gebildet ist, wobei die Übergangsstruktur eine sich an die Formoberfläche des Formeinsatzes anschließende Auflageebene für die Membran und Luftführungskanäle im Zwischenraum zwischen jeweils aneinander gestapelten Lagen der plattenförmigen Stützelemente aufweist.

Mit einer solchen Übergangsstruktur gelingt es, die durch die Membran anzuformende Fläche zu verkleinern und dadurch die Membrandehnungen zu verringern bzw. zu begrenzen. Somit wird die Gefahr der Überlastung und des Reißens der Membran deutlich reduziert. Abrupte Übergänge an den Rändern des Formwerkzeuges werden durch die daran angrenzende Übergangsstruktur verhindert.

Durch den Aufbau der Übergangsstruktur aus plattenförmigen Stützelementen kann eine variable Anpassung der Übergangsstruktur an die jeweilige Größe des Formwerkzeuges erfolgen. Damit lassen sich auf materialsparende und einfache Weise unterschiedliche Formwerkzeuge in das Formwerkzeug einbinden.

Der Aufbau der Übergangsstruktur aus plattenförmigen Stützelementen hat im Vergleich zur Nutzung massiver Materialien, wie z.B. Metallen, den Vorteil einer deutlichen Verringerung der thermischen Masse, was zu kürzeren Prozesszeiten im Hinblick auf die Aufheiz- und Abkühlphasen im Fertigungsprozess führt. Dabei lassen sich eine Vielzahl von luftführenden Kanälen insb. im Zwischenraum zwischen nebeneinander angeordneten Platten der Stützelemente realisieren, so dass ein großflächig verteiltes Evakuieren des Innenraums erreicht werden kann. Sofern in einem Fertigungsabschnitt kein Vakuum benötigt wird, bspw. vor der Evakuierung in einer Aufwärmphase oder nach der Evakuierung in einer Abkühlphase, können die verteilten luftführenden Kanäle dann zur Zufuhr eines wärmenden oder kühlenden Luftstroms genutzt werden.

Die Formstabilität der aneinander gestapelten plattenförmigen Stützelemente ermöglicht ein Tragen der darauf im evakuierten Zustand aufgelagerten Membran.

Die aus plattenförmigen Stützelementen zusammengestellte Übergangsstruktur trägt dabei zu einem stabilen Fertigungsprozess und einer hohen Anzahl an möglichen Abformungen bei.

Die Stützelemente können vertikal oder horizontal geschichtet sein.

Die Lagen von plattenförmigen Stützelementen können so geschichtet sein, dass die Luftführungskanäle vom Formeinsatz zu mindestens einem Absauganschluss für die Absaugeinheit hin ausgerichtet sind. Dabei können an den Seitenwänden der plattenförmigen Stützelemente Stege und/oder Nuten zur Bildung von luftführenden Kanälen zwischen jeweils zwei aneinander gestapelten Platten der Stützelemente vorhanden sein. Alternativ oder zusätzlich hierzu können sich auch Kanäle durch das innere Volumen der plattenförmigen Stützelemente erstrecken.

Die Absaugeinheit kann beispielsweise eine Vakuumpumpe, eine Venturi-Düsen-Einheit und dergleichen sein, um die Kavität unterhalb der Membran oder zwischen zwei Membranen zu entlüften.

Die Stützelemente können aus einem faserhaltigen Naturwerkstoff, bevorzugt aus Sperrholz, Pappe, Karton oder Papier, gebildet sein.

Unter Pappe ist ein Werkstoff zu verstehen, der aus Holzstoff, Zellstoff, Halbzellstoff oder Altpapier durch Zusammenkleben oder Zusammenpressen gefertigt wird. Dabei kann es sich um eine Platte mit einer Dicke von mindestens 1,5 mm handeln. Geeignet ist Vollpappe als massive Platte (einlagig, mehrlagig (gegautscht) oder mehrschichtig

(geklebt) mit geschlossener Stirnseitenkante oder Wellpappe als mehrlagige Platte mit zwischenliegender gewellter Schicht, deren Stirnseitenkanten Öffnungen hat.

Karton und Papier unterscheidet sich von Pappe durch eine geringere Dicke und flächenbezogene Masse.

| | |
|---|---|
| Papier: | 7 g/m² bis 250 g/m² |
| Karton: | 150 g/m² bis 600 g/m² |
| Pappe: | ab 500 g/m². |

Je nach flächenbezogener Masse wird gemäß DIN 6730 Karton entweder Papier oder Pappe zugeschlagen. Dabei ist Papier mit einer flächenbezogenen Masse zwischen 7 g/m² bis 225 g/m² und Pappe ab 225 g/m² definiert.

Die Verwendung von Wellpappe hat den Vorteil, dass durch die Wellenform luftführende Kanäle im Innenraum der aus Wellpappe gebildeten plattenförmigen Stützelemente vorhanden sind.

Der Träger kann luftundurchlässig sein. Denkbar ist aber auch, dass eine luftundurchlässige Hülle um den (luftdurchlässigen) Träger herum angeordnet ist und den Träger einhüllt. Damit kann, z. B. bei der Nutzung von luftdurchlässiger Wellpappe als Trägerelemente, ein luftdichtes Verschließen von Seitenwänden eines rahmenförmigen Trägers, die eine Aufnahmeöffnung für die Übergangsstruktur bilden, erfolgen. Das luftdichte Verschließen kann an den Innenwänden und/oder Außenwänden des Trägers erfolgen. Eine Absaugung des Innenraums kann über einen Durchlass, d. h. eine Luftabsaugöffnung, z.B. auf der Bodenplatte erfolgen, indem ein Unterdruck in der formgebenden Struktur erzeugt wird.

Der Formeinsatz kann ebenso wie die Übergangsstruktur aus aneinander geschichteten Lagen von plattenförmigen Stützelementen gebildet sein, die jeweils mit einem Konturprofil an einer Stirnseitenkante versehen sind, wobei die formgebende Kontur aus jeweils einer Stirnseitenkante der aneinander geschichteten Stützelemente gebildet ist.

Damit gelingt ein schneller, einfacher und preiswerter Aufbau des Formwerkzeuges, insb. für Rapid-Prototyping, wobei das Formwerkzeug eine geringe thermische Masse hat. Damit können die Aufheiz- und Abkühlzeiten verkürzt werden.

Der Formeinsatz ist mit einer Formschicht abdeckbar und ein Fasergelege ist auf der Formschicht auflegbar und die mit dem Fasergelege gebildete Faserverbundwerkstoffkomponente ist mit der eingeprägten formgebende (d.h. formbildende) Kontur des Formeinsatzes abformbar. Die Formschicht kann durch die den Rahmen abdeckende Membran gebildet sein, die durch Unterdruck (d.h. Vakuum) auf die Oberseite der Übergangsstruktur und den Formeinsatz gezogen wird.

Damit wird ein formvariables Formwerkzeug für die Herstellung von Faserverbundwerkstoffen auf Basis von plattenförmigen (d. h. zweidimensionalen) Stützelementen geschaffen. Die formgebende Struktur bilden dünne Stützelemente (auch Formelemente genannt), die vertikal in einen Rahmen und/oder Halterahmen eingesteckt werden können. Auf diese Weise können dreidimensionale Formflächen über die Stirnseitenkanten der zweidimensionalen Elemente abgebildet werden. Unter plattenförmigen Stützelementen werden auch sehr dünne blattförmige Elemente verstanden. Die formgebende Kontur wird dabei aus jeweils einer Stirnkante der aneinander geschichteten Stützelemente gebildet.

Die Abformung der Faserverbundbauteile erfolgt auf der im Werkzeug erzeugten Formschicht, mit der die formgebende Kontur der geschichteten Stützelemente abgedeckt wird.

Auf den Formeinsatz kann eine vakuumdichte Formschicht aufgelegt sein. Eine solche Formschicht deckt nicht nur die formgebende Kontur der Stützelemente ab, um diese vor Umwelteinflüssen, insb. Feuchtigkeit, bei der Abformung zu schützen. Vielmehr gelingt mit der Vakuumdichtigkeit der Formschicht, dass sich die Formschicht in eine formgebende negative Kontur (Mulde) hineinzieht, wenn in den luftdicht angeschlossenen Träger ein Unterdruck aufgebracht wird.

Die abformbare Formoberfläche kann damit im Formwerkzeug selbst erzeugt werden. Eine Luftdurchlässigkeit der Stützelemente des Formeinsatzes ermöglicht den Aufbau eines Unterdrucks auf der Oberfläche des Formeinsatzes durch die luftdurchlässigen Stützelemente des Formeinsatzes hindurch.

Damit kann eine Werkzeugkontur mit hoher Toleranz erzeugt werden, indem die Formschicht mit einem Unterdruck präzise ganzflächig auf die konturierte Oberfläche des Formeinsatzes gezogen wird. Ein etwaiger Tiefziehprozess durch ein z. B. zweites Werkzeug entfällt. Damit müssen die Formoberflächen nicht in einem zusätzlichen Prozessschritt mit gesondertem Werkzeug gefertigt werden.

Die auf den Formeinsatz aufgelegter und an die konturierte Oberfläche des Formeinsatzes angeschmiegte Formschicht kann individuell für jede neue Oberflächengeometrie angepasst werden, insb. hinsichtlich der Materialstärke und Materialauswahl.

Die Formschicht kann vorzugsweise eine Formfolie, ein faserverstärkter Kunststoffverbund oder eine aufgespachtelte Deckschicht sein.

Der Formeinsatz kann mindestens ein Funktionselement aufweisen. Das Funktionselement kann dabei aus der Gruppe von Heizelement, Sensor oder Aktor ausgewählt sein. Damit können wahlweise Zusatzfunktionen in das Formwerkzeug integriert werden. Mit Hilfe von Sensoren (z. B. Temperatur, Druck) lassen sich dann Fertigungsparameter bei der Herstellung des Faserverbundwerkstoffkomponente messen und der Fertigungsprozess anhand der gemessenen Sensordaten bedarfsgerecht nachregeln. Mit Hilfe von Aktoren lassen sich während des Fertigungsprozesses bedarfsweise Einwirkungen auf die Faserverbundwerkstoffkomponente aufprägen, um z.B. unerwünscht auftretenden Verformungen entgegenzuwirken oder geplant nach erst einer Vorhärtung Zusatzkonturen einzubringen. Auch Heizelemente sind im weitesten Sinne Aktoren, die durch geregelte Heiz- oder Kühlwirkung einen geregelten Einfluss auf lokale Fertigungstemperaturen ausüben können. Damit lässt sich beispielsweise eine gleichmäßigere Temperaturverteilung während des Fertigungsprozesses erreichen, der durch mit Sensoren lokal gemessene Temperatursensordaten geregelt wird.

Das Funktionselement kann aus der Gruppe von Heizelement, Sensor oder Aktor ausgewählt sein.

Das Funktionselement kann in einer vakuumdichten Formschicht sein oder mindestens einen Teil der vakuumdichten Formschicht bilden.

Die Stützelemente der Übergangsstruktur und/oder des Formeinsatzes können hochkant in eine von Seitenwänden eines rahmenförmigen Trägers umrandete und von der Membran abdeckbare Aufnahmeöffnung eingesteckt und flächig nebeneinander in der Aufnahmeöffnung angeordnet sein.

Auf der Bodenplatte des Trägers kann mindestens ein Führungselement angeordnet sein. Die Stützelemente der Übergangsstruktur können eine Führungskontur haben, wobei das Führungselement des Trägers und die Führungskontur komplementär zur formschlüssigen Lagerung der Stützelemente an dem Führungselement auf der Bodenplatte ausgebildet sind.

Vorteilhaft ist es, wenn mindestens ein Seitenhalteelement auf dem mindestens einen Führungselement verschiebbar gelagert und an den jeweils äußeren Stützelementen anschmiegbar ist und jeweils eine Seitenwand des Trägers bildet. Es können beidseits zwei einander gegenüberliegende Paare von Seitenhalteelementen vorhanden sein, von denen mindestens eines verschiebbar ist.

Die Membran kann eine formgebende Konturoberfläche bilden, auf die ein Faserverbundgelege zum Abformen auflegbar ist. Eine weitere Membran ist auf das Faserverbundgelege auflegbar. Die Luft zwischen den beiden aufeinander liegenden Membranen, zwischen denen das Faserverbundgelege liegt, ist zusammen mit dem im Faserverbundgelege vorhandenen Matrixmaterial absaugbar.

Der Träger kann von der Bodenplatte abragende Seitenwände haben und damit einen Rahmen bilden. Das Formwerkzeug kann in dem von den Seitenwänden umschlossenen Innenraum des Rahmens angeordnet und die Membran auf den freien Stirnseiten der Seitenwände auflagert sein.

Das Verfahren zur Herstellung von Faserverbundwerkstoffkomponenten mit einem oben beschriebenen Formwerkzeug hat die Schritte:
- Auflegen eines Formeinsatzes auf die Bodenplatte des Trägers;
- Einsetzen einer durch plattenförmige Stützelemente gebildeten Übergangsstruktur neben den Formeinsatz auf die Bodenplatte des Trägers;
- Auflegen eines Faserverbundwerkstoffs auf den Formeinsatz;
- Abdecken des Trägers mit einer Membran, welche den Formeinsatz und die daran angrenzenden Stützelemente der Übergangsstruktur abdeckt; und
- Abformen der aus dem Faserverbundwerkstoff gebildeten Faserverbundwerkstoffkomponente mit der formgebenden Kontur des Formeinsatzes, wobei die in dem durch die Membran abgeschlossenen Innenraum des Trägers befindliche Luft abgesaugt wird, umdas in dem Faserverbundgelege, das zwischen dem Formeinsatz und der Membran angeordnet ist, vorhandene Matrixmaterial abzusaugen oder die formgebende Kontur für den auf der Membran aufliegenden Faserverbundwerkstoff zu bilden.

Das Abformen erfolgt in bekannter Weise durch Tränken des auf die Formschicht aufgelegten Faserverbundwerkstoffs mit Matrixmaterial (insb. Harz und Härter) und Aushärten des Faserverbundes, das aus dem Fasergelege und dem Matrixmaterial besteht. Hierbei kann ein Vakuum genutzt werden, um überschüssiges Matrixmaterial aus dem Fasergelege herauszuziehen.

Die an den Formeinsatz angrenzende Übergangsstruktur kann durch aneinander Schichten der Stützelemente gebildet werden. Die Stützelemente können aus einem faserhaltigen Naturwerkstoff, bevorzugt aus Sperrholz, Pappe, Karton oder Papier, gebildet sein.

Ebenso kann ein Bilden des Formeinsatzes durch aneinander geschichtete Lagen von Stützelementen aus einem faserhaltigen Naturwerkstoff erfolgen, bevorzugt aus Sperrholz, Pappe, Karton oder Papier. Damit lässt sich der Formeinsatz

Für die Stützelemente der Übergangsstruktur und/oder des Formeinsatzes eignet sich besonders Pappe durch ihren inneren Strukturaufbau. Insb. bei Verwendung von Wellpappe wird eine größere Dicke erreicht, so dass die Anzahl der Lagen im vertretbaren Ausmaß gehalten werden kann. Zudem sind damit eine Vielzahl von verteilt angeordneten Luftkanälen in der Wellpappe vorhanden. Die Dicke kann aber auch durch geeignete Faltung bzw. Wellung der platten- bzw. blattförmigen Einzelelemente erhöht werden. Damit kann der Rahmen auch mit wirtschaftlich vertretbarem Materialeinsatz aus dünnerem Karton- oder Papiermaterial gebildet werden.

Es kann ein Abdecken des Formeinsatzes durch Aufspachteln einer Spachtelmasse oder Auflegen der Membran auf die durch die Stirnseiten der aneinander angeordneten Stützelemente gebildeten Oberseite erfolgen.

Insbesondere bei der Bildung des formgebenden Formeinsatzes und der Übergangsstruktur, die dann ggf. auch ein Abschnitt des formgebenden Formeinsatzes sein kann, aus plattenförmigen Stützelementen ist es vorteilhaft, die durch die aneinander angrenzenden Stirnseiten der plattenförmigen Stützelemente gebildete Oberfläche durch die darauf aufgelegte und tiefgezogene Membran abzudecken. Die Membran kann hierzu eine luftdichte Folie sein, die durch ein Vakuum auf die Oberfläche gezogen wird. Die Membran schließt die offenen Kanäle der aneinander geschichteten plattenförmigen Stützelemente, wie bspw. der Pappscheiben, und bildet somit erst im Fertigungsprozess die zum Abformen benötigte geschlossene Oberfläche. Im Normalfall müsste diese vorab verschlossen werden, z.B. durch Spachtelmasse oder prinzipiell durch die Wahl eines nicht porösen Formmaterials, was jedoch die Funktion der Luftförderung unmöglich macht. Die formgebende Membran kann dann als Kontur für nachgelagerte Ablage-/Urformprozesse (z.B. Laminatablage) verwendet werden. Dabei kann das vorgetränkte oder trockene Faserverbundgelege auf der auf den Formeinsatz und die Übergangsstruktur gezogene Membran aufgelegt und mit einer weiteren Membran abgedeckt werden, um den Zwischenraum zwischen den Membranen zu evakuieren.

Ganz allgemein sind im Zusammenhang mit dieser Anmeldung die Wörter "ein/eine", soweit nicht ausdrücklich anders definiert, nicht als Zahlwort zu verstehen, sondern als unbestimmte Artikel mit dem Wortsinn von "mindestens ein/eine".

Die Erfindung wird nachfolgend beispielhaft anhand eines Ausführungsbeispiels näher beschrieben. Es zeigen:
- Fig. 1 -: Skizze eines Formwerkzeuges mit rahmenförmigem Träger und darin eingesetztem Formeinsatz und Übergangsstruktur sowie Membranabdeckung;
- Fig. 2 -: Draufsicht auf das Formwerkzeug aus Figur 1;
- Fig. 3 -: Skizze des Formwerkzeuges aus Figur 1 mit auf die Auflageoberfläche des Formeinsatzes und der Übergangsstruktur durch Vakuum gezogener Membran;
- Fig. 4 -: Skizze des Formwerkzeuges aus Figur 1 mit einem erhabenem Formeinsatz;
- Fig. 5 -: Skizze eines Formwerkzeuges mit aus einer Bodenplatte bestehenden Trägers und darauf aufgesetztem Formeinsatz und Übergangsstruktur sowie Membranabdeckung;
- Fig. 6 -: Skizze des Formwerkzeuges aus Figur 5 mit aus geschichteten Stützelementen gebildetem Formeinsatz;
- Fig. 7 -: Skizze eines Formwerkzeuges mit auf einen Träger aufgesetztem Formeinsatz und Übergangsstruktur und Membranabdeckung und Faserverbundgelege auf der Oberseite der Membranabdeckung.

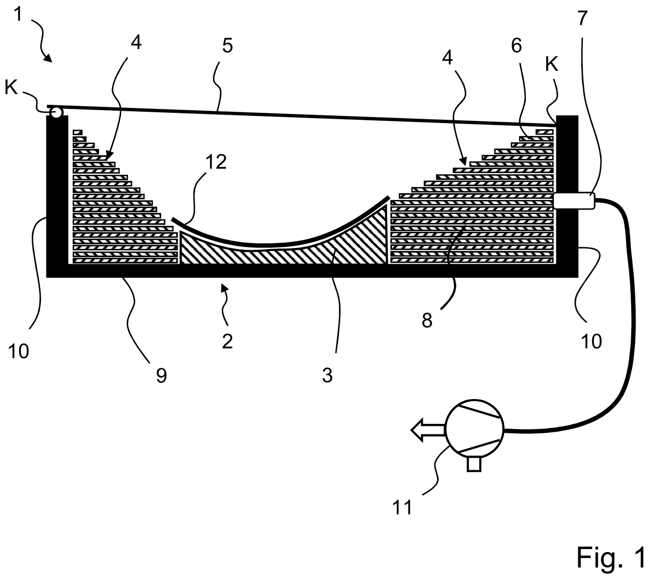

Figur 1 zeigt eine Skizze eines Formwerkzeuges 1 mit einem rahmenförmigem Träger 2 und darin eingesetztem Formeinsatz 3 sowie einer an den Formeinsatz 3 angrenzenden Übergangsstruktur 4. Der Träger 2 ist mit einer Membran 5 abgedeckt, die in einem umlaufenden dichten Kontaktbereich K mit dem Träger 2 verbunden ist.

In dem dargestellten Ausführungsbeispiel hat der Formeinsatz 3 eine Negativform, d.h. eine konkave Kontur. Denkbar ist aber auch gleichermaßen ein Formeinsatz 3 mit Positivform, d.h. einer konvexen Kontur, oder einer Kombination aus Negativ- und Positivform.

An den Außenseiten des Formeinsatzes 3 schließt sich die Übergangsstruktur 4 an, welche aus aneinander gestapelten plattenförmigen Stützelementen 6 gebildet ist. Die plattenförmigen Stützelemente 6 können beispielsweise Pappelemente aus Pappe, insb. Wellpappe, sein. Die Zwischenräume zwischen den jeweils aneinander gestapelten Platten, d.h. den plattenförmigen Stützelementen 6, sind vom Formeinsatz 3 zu jeweils einem Absauganschluss 7 hin ausgerichtet und bilden Luftführungskanäle 8. Hierzu können an den Außenwänden der plattenförmigen Stützelemente 6 Stege und/oder Nuten eingebracht sein oder zusätzliche Leisten in den Zwischenraum eingelegt werden. Alternativ oder zusätzlich hierzu können entsprechend ausgerichtete Luftführungskanäle 8 auch im Innenvolumen der plattenförmigen Stützelemente 6, wie bspw. durch Wellstege im Innenraum von Wellpappe, gebildet sein.

In dem dargestellten Ausführungsbeispiel ist der Träger 2 aus einer Bodenplatte 9 und von der Bodenplatte 9 abragenden Seitenwänden 10 gebildet. Damit wird ein Rahmen bereitgestellt, in dessen Innenraum der Formeinsatz 3 und die Übergangsstruktur 4 eingesetzt wird. Die Übergangsstruktur 4 kann dabei aus mehreren voneinander unabhängig zusammengesetzten Teilstrukturen gebildet werden. Mindestens ein Absauganschluss 7 kann wie dargestellt in einer Seitenwand 10 eingebaut sein. Alternativ oder zusätzlich hierzu kann aber auch die Bodenplatte 9 einen Absauganschluss 7 haben. An den mindestens einen Absauganschluss 7 ist eine Absaugeinheit 11 anschließbar, um den Innenraum zwischen der Membran 5 und dem Rahmen, d.h. zwischen dem ringsum dichten Anschluss der Membran an die Seitenwände 10 und/oder die Bodenplatte 9, zu evakuieren. Die Absaugeinheit 11 kann beispielsweise eine Vakuumpumpe, eine Venturi-Düsen-Einheit oder ähnliches zum Entlüften der Kavität innerhalb der Membran sein.

Die Membran 5 kann dabei wie skizziert im Kontaktbereich K auf der Stirnseite mindestens einer Seitenwand 10 aufliegen, an der Seitenwand 10 angebracht sein und/oder mit der Bodenplatte 9 verbunden sein.

In dem dargestellten Ausführungsbeispiel sind die plattenförmigen Stützelemente 6 der Übergangstruktur 4 horizontal übereinandergestapelt. Dabei entspricht die Höhe der Übergangsstruktur 4 angrenzend an den Frommeinsatz 3 in etwa der dortigen Höhe des Formeinsatzes 3 und steigt in Richtung der zugeordneten Seitenwand 10 bis etwa der Höhe der dichten Befestigung der Membran 5 an der Seitenwand 10 an.

Auf der formgebenden Kontur des Formeinsatzes 3 liegt ein Faserverbundgelege 12 auf. Dieses kann bspw. ein entlüfteter unausgehärteter Lagenstapel sein, der vorgetränkt, d.h. pre-impregnated, oder eine Trockenfaser ist. Bei einer Trockenfase erfolgt im Fertigungsprozess eine Infusion mit Matrixmaterial, das bei der Evakuierung des Zwischenraums zwischen Matrix und Formeinsatz und Übergangsstruktur in die Trockenfaser eingezogen wird.

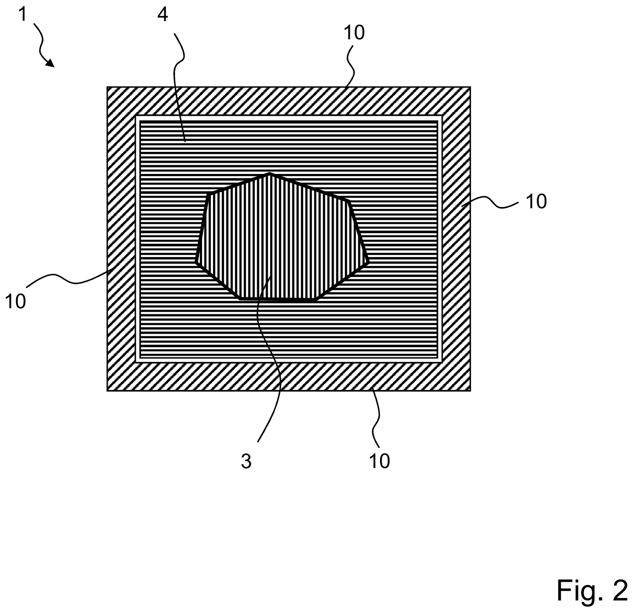

Figur 2 zeigt eine Draufsicht auf das Formwerkzeug 1 aus Figur 1. Es ist erkennbar, dass der Formeinsatz 3 in dem Innenraum des rahmenförmigen Trägers 2 beabstandet zu den Seitenwänden 10 eingesetzt ist. Die Seitenwände 10 umschließen den Umfang des rahmenförmigen Trägers 2 luftdicht. An den Formeinsatz 3 schließt sich die aus aneinander gestapelten Stützelementen 6 gebildete Übergangsstruktur 4 an, die sich bis zu den Seitenwänden 10 erstreckt. Die plattenförmigen Stützelemente 6 können horizontal oder vertikal aneinander gestapelt sein. Sie müssen dabei nicht unmittelbar aneinander liegen. Vielmehr sollte ein Zwischenraum zwischen den jeweils direkt benachbarten Seitenwänden von Paaren plattenförmiger Stützelemente 6 vorhanden sein.

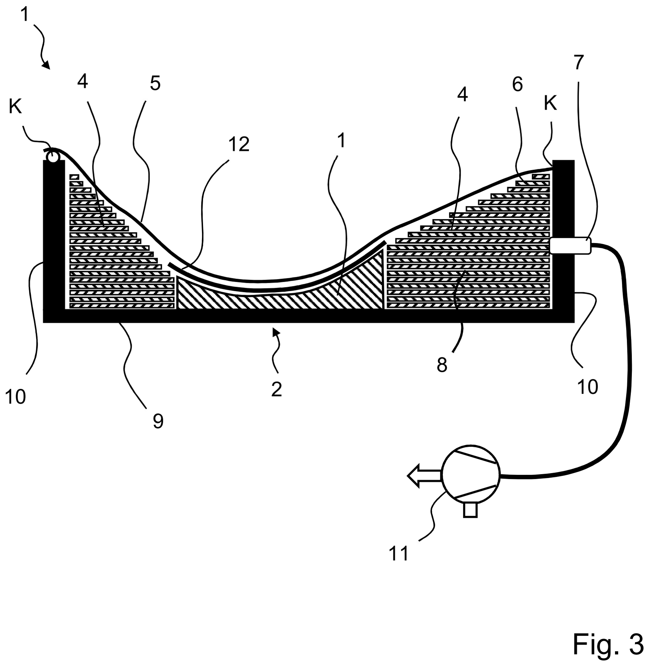

Figur 3 zeigte eine Skizze des Formwerkzeuges 1 aus Figur 1 mit auf die Auflageoberfläche des Formeinsatzes 3 und der Übergangsstruktur 4 durch Vakuum gezogener Membran 5.

Es ist erkennbar, dass die Membran 5 durch Evakuierung des Innenraums zwischen Membran 5 und rahmenförmigen Träger 2 mit Hilfe der Absaugeinheit 11 auf die Oberseite der Übergangsstruktur 4 und das auf dem Formeinsatz 3 aufliegende Faserverbundgelege 12 gezogen wird. Damit wird die formgebende Kontur des Formeinsatzes 3 auf das Faserverbundgelege 12 abgeformt und das Faserverbundgelege 12 wird in dem Fertigungsprozess ausgehärtet.

Mit Hilfe der Übergangsstruktur 4 wird erreicht, dass die Membran 5 weniger stark gedehnt werden muss, als bei einem Abformen ohne Übergangsstruktur 4, bei der die Membran 5 bis zur Bodenplatte 9 hin heruntergezogen würde.

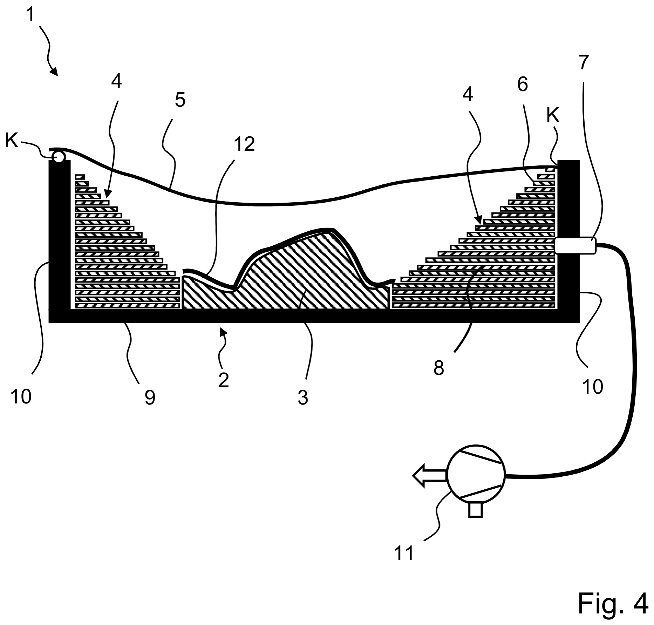

Figur 4 zeigt eine Skizze des Formwerkzeuges 1 aus Figur 1 mit einem erhabenem Formeinsatz 3. Die formgebende Kontur ist als Positivform bzw. Kombination von Positiv- und Negativform ausgebildet. Die aus plattenförmigen Stützelementen 6 gebildete Übergangsstruktur 4 ist an den im Vergleich zum ersten Ausführungsbeispiel an den Seitenkanten deutlich niedrigeren Formeinsatz 3 angepasst.

Durch Evakuierung des Innenraums mit Hilfe der Absaugeinheit 11 und der zum Absauganschluss 7 führenden Luftführungskanäle 8 wird die Membran 5 auf das Faserverbundgelege 12 gezogen, wobei durch die Auflage auf der Übergangsstruktur 4 die Auslenkung der Membran 5 und damit die Dehnung deutlich verringert werden kann.

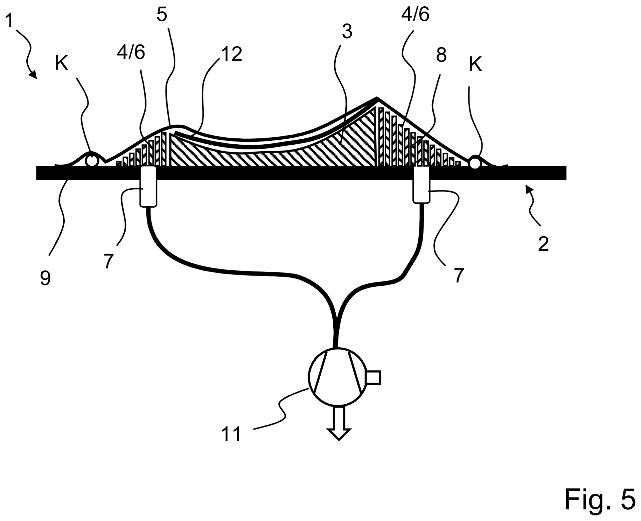

Figur 5 zeigt eine Skizze eines Formwerkzeuges 1 mit einem aus einer Bodenplatte 9 bestehenden Träger 2 und darauf aufgesetztem Formeinsatz 3 und Übergangsstruktur 4 sowie einer Abdeckung mit einer Membran 5.

Es ist erkennbar, dass die Membran 5 in einem Kontaktbereich K umlaufend dicht mit der Bodenplatte 9 verbunden ist.

Die aus plattenförmigen Stützelementen 6 gebildete Übergangsstruktur 4 steigt von dem Kontaktbereich K zum Formeinsatz 6 bis zur jeweiligen Höhe des Formeinsatzes 3 an. Damit wird ein kontinuierlicher Übergang der Membran 5 vom Kontaktbereich K zum Formeinsatz 3 sichergestellt. Die Evakuierung kann dabei mit mindestens einem Absauganschluss 7 in der Bodenplatte 9 erfolgen, an die eine Absaugeinheit 11 angeschlossen ist. Die plattenförmigen Stützelemente 6 sind bei diesem Ausführungsbeispiel bevorzugt vertikal auf der Bodenplatte 9 gelagert, so dass die dabei gebildeten Luftführungskanäle 8 von der Membran 8 zum Absauganschluss 7 führen.

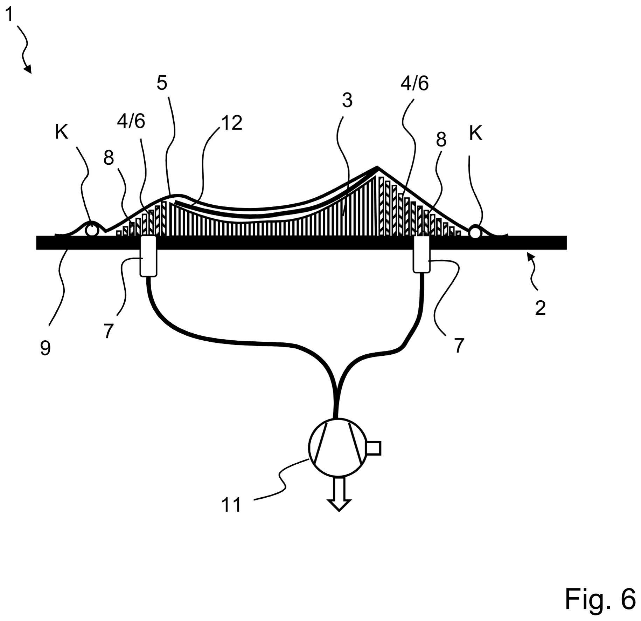

Figur 6 zeigt eine Skizze des Formwerkzeuges 1 aus Figur 5 mit einem Formeinsatz 3, der vergleichbar zu der Übergangsstruktur 4 aus geschichteten Stützelementen 13 gebildet wird.

Die geschichteten plattenförmigen Stützelemente 13 können ebenso aus einem Naturwerkstoff, wie bspw. Sperrholz, Faserplatte, Spanplatte, Pappe, Karton oder Papier gebildet sein. Wiederum bietet die Verwendung von Wellpappe hinsichtlich der Bearbeitbarkeit, Stabilität und Kosten einen großen Vorteil.

Ein solcher aus plattenförmigen Stützelementen 13 modular aufgebauter Formeinsatz 3 kann in allen vorbeschriebenen Ausführungsbeispielen eingesetzt werden, insb. mit einem rahmenlosen oder rahmenförmigen Träger 2.

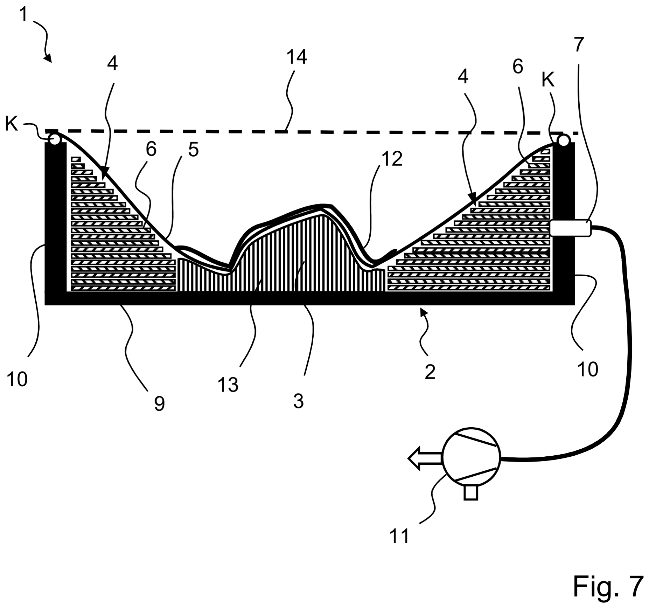

Figur 7 zeigt eine Skizze eines Formwerkzeuges 1 mit einem Formeinsatz 3 und einer Übergangsstruktur 4, die auf einen Träger 2 aufgesetzt sind. Der Träger 2 ist mit einer Membran 5 abgedeckt. Ein Faserverbundgelege 12 ist auf der Oberseite der Membran 5 aufgelegt.

Mit Hilfe der Membran 5 gelingt es, den aus plattenförmigen Stützelementen 13 gebildeten Formeinsatz 3 dicht abzuschließen. Auf das Auftragen einer Formschicht durch Spachtelmasse kann damit verzichtet werden. Die Membran 5 wird durch die Luftführungskanäle 8 der aus den plattenförmigen Stützelementen 13 gebildeten Formeinsatzes 3 auf die formgebende Kontur des Formeinsatzes 3 gezogen, um damit eine qualitativ hochwertige formgebende Oberfläche bereitzustellen.

Diese formgebende Oberfläche wird als Kontur zur Ablage des Faserverbundgeleges 12 für den nachgelagerten Ablage- und Urformprozess genutzt.

Vorteilhaft ist es, die erste Membran 5 mit dem darauf abgelegten Faserverbundgelege 12 mit einer weiteren Membran 14 abzudecken und den Zwischenraum der ersten Membran 5 und zweiten Membran 14 zu evakuieren.

### Bezugszeichenliste

- 1: Formwerkzeug
- 2: Träger
- 3: Formeinsatz
- 4: Übergangsstruktur
- 5: Membran
- 6: plattenförmiges Stützelement der Übergangsstruktur
- 7: Absauganschluss
- 8: Luftführungskanal
- 9: Bodenplatte
- 10: Seitenwand
- 11: Absaugeinheit
- 12: Faserverbundgelege
- 13: plattenförmiges Stützelement des Formeinsatzes
- 14: weitere (zweite) Membran

- K: Kontaktbereich

## Patentansprüche

1. Formwerkzeug (1) zur Herstellung von Faserverbundwerkstoffkomponenten mit
- einem Träger (2), der eine Bodenplatte (9) und einen Absauganschluss (7) zum Anschluss einer Absaugeinheit (11) hat,
- einem Formeinsatz (3), der auf der Bodenplatte (9) lagerbar ist, wobei der Formeinsatz (3) eine formgebende Kontur hat, und
- einer an dem Träger (2) gelagerten Membran (5),
**gekennzeichnet durch**
eine zwischen dem Formeinsatz (3) und dem Kontaktbereich der Membran (5) mit dem Träger (2) angeordnete Übergangsstruktur (4), die aus aneinander geschichteten Lagen von plattenförmigen Stützelementen (6) gebildet ist, wobei die Übergangsstruktur (4) eine sich an die Formoberfläche des Formeinsatzes (3) anschließende Auflageebene für die Membran (5) und Luftführungskanäle (8) im Zwischenraum zwischen jeweils aneinander gestapelten Lagen der plattenförmigen Stützelemente (6) und/oder in den plattenförmigen Stützelementen (6) aufweist.

2. Formwerkzeug (1) nach Anspruch 1, **dadurch gekennzeichnet, dass** die Stützelemente (6) vertikal oder horizontal geschichtet sind.

3. Formwerkzeug (1) nach Anspruch 1 oder 2, **dadurch gekennzeichnet, dass** die Lagen von plattenförmigen Stützelementen (6) so geschichtet sind, dass die Luftführungskanäle (8) vom Formeinsatz (3) zu mindestens einem Absauganschluss (7) für die Absaugeinheit (11) hin ausgerichtet sind.

4. Formwerkzeug (1) nach einem der Ansprüche 1 bis 3, **dadurch gekennzeichnet, dass** die Stützelemente (6) aus einem faserhaltigen Naturwerkstoff, bevorzugt aus Sperrholz, Pappe, Karton oder Papier, gebildet sind.

5. Formwerkzeug (1) nach einem der vorhergehenden Ansprüche, **dadurch gekennzeichnet, dass** der Träger (2) luftundurchlässig ist.

6. Formwerkzeug (1) nach einem der vorhergehenden Ansprüche, **dadurch gekennzeichnet, dass** eine luftundurchlässige Hülle um den Träger (2) herum angeordnet ist und den Träger (2) einhüllt.

7. Formwerkzeug (1) nach einem der vorhergehenden Ansprüche, **dadurch gekennzeichnet, dass** der Formeinsatz (3) aus aneinander geschichteten Lagen von plattenförmigen Stützelementen (13) gebildet ist, die jeweils mit einem Konturprofil an einer Stirnseitenkante versehen sind, wobei die formgebende Kontur aus jeweils einer Stirnseitenkante der aneinander geschichteten Stützelemente (13) gebildet ist.

8. Formwerkzeug (1) nach einem der vorhergehenden Ansprüche, **dadurch gekennzeichnet, dass** eine vakuumdichte Formschicht auf dem Formeinsatz (3) aufgebracht ist.

9. Formwerkzeug (1) nach einem der vorhergehenden Ansprüche, **dadurch gekennzeichnet, dass** der Formeinsatz (3) mindestens ein Funktionselement aufweist.

10. Formwerkzeug (1) nach Anspruch 9, **dadurch gekennzeichnet, dass** das Funktionselement aus der Gruppe von Heizelement, Sensor oder Aktor ausgewählt ist.

11. Formwerkzeug (1) nach Anspruch 8 in Kombination mit Anspruch 9 oder 10, **dadurch gekennzeichnet, dass** das Funktionselement in der vakuumdichten Formschicht ist oder mindestens einen Teil der vakuumdichten Formschicht bildet.

12. Formwerkzeug (1) nach einem der vorhergehenden Ansprüche, **dadurch gekennzeichnet, dass** die Stützelemente (6, 13) hochkant in eine von dem rahmenförmigen Träger (2) umrandete und von der Membran (5) abdeckbare Aufnahmeöffnung eingesteckt und flächig nebeneinander in der Aufnahmeöffnung angeordnet sind.

13. Formwerkzeug (1) nach einem der vorhergehenden Ansprüche, **dadurch gekennzeichnet, dass** auf der Bodenplatte (9) des Trägers (2) mindestens ein Führungselement angeordnet ist und die Stützelemente (6, 13) eine Führungskontur haben, wobei das Führungselement und die Führungskontur komplementär zur formschlüssigen Lagerung der Stützelemente an dem Führungselement auf der Bodenplatte (9) ausgebildet sind.

14. Formwerkzeug (1) nach Anspruch 13, **gekennzeichnet durch** mindestens ein Seitenhalteelement, das auf dem mindestens einen Führungselement verschiebbar gelagert und an den jeweils äußeren Stützelementen (6) anschmiegbar ist und jeweils eine Seitenwand (10) des rahmenförmigen Trägers (2) bildet.

15. Formwerkzeug (1) nach einem der vorhergehenden Ansprüche, **dadurch gekennzeichnet, dass** die Membran (5) eine formgebende Konturoberfläche bildet, auf die ein Faserverbundgelege (12) zum Abformen auflegbar ist, und dass eine weitere Membran (14) auf das Faserverbundgelege (12) auflegbar ist und die Luft zwischen den beiden aufeinander liegenden Membranen (5) mit zwischenliegendem Faserverbundgelege (12) absaugbar ist.

16. Formwerkzeug (1) nach einem der vorhergehenden Ansprüche, **dadurch gekennzeichnet, dass** der rahmenförmige Träger (2) von der Bodenplatte (9) abragende Seitenwände (10) hat, wobei der Formeinsatz (3) in dem von den Seitenwänden (10) umschlossenen Innenraum des Trägers (2) angeordnet und die Membran (5) auf den freien Stirnseiten der Seitenwände (10) und/oder an den Seitenwänden (10) auflagert ist.

17. Verfahren zur Herstellung von Faserverbundwerkstoffkomponenten mit einem Formwerkzeug (1) nach einem der vorhergehenden Ansprüche, **gekennzeichnet durch**
- Auflegen eines Formeinsatzes (3) auf die Bodenplatte (9) des Trägers (2);
- Einsetzen einer durch plattenförmige Stützelemente (6) gebildeten Übergangsstruktur (4) neben den Formeinsatz (3) auf die Bodenplatte (9) des Trägers (2);
- Auflegen eines Faserverbundgeleges (12) auf den Formeinsatz (3);
- Abdecken des Trägers (2) mit einer Membran (5), welche den Formeinsatz (3) und die daran angrenzenden Stützelemente (6) der Übergangsstruktur (4) abdeckt; und
- Abformen der aus dem Faserverbundgelege (12) gebildeten Faserverbundwerkstoffkomponente mit der formgebenden Kontur des Formeinsatzes (3), wobei die in dem durch die Membran (5) abgeschlossenen Innenraum des Trägers (2) befindliche Luft abgesaugt wird, um das in dem Faserverbundgelege (12), das zwischen dem Formeinsatz (3) und der Membran (5) angeordnet ist, vorhandene Matrixmaterial abzusaugen oder die formgebende Kontur für das auf der Membran (5) aufliegenden Faserverbundgelege (12) zu bilden.

18. Verfahren nach Anspruch 17, **gekennzeichnet durch** Bilden der an den Formeinsatz (3) angrenzenden Übergangsstruktur (4) durch aneinander Schichten der Stützelemente (6), die aus einem faserhaltigen Naturwerkstoff, bevorzugt aus Sperrholz, Pappe, Karton oder Papier, gebildet sind.

19. Verfahren nach Anspruch 17 oder 18, **gekennzeichnet durch** Bilden des Formeinsatzes (3) durch aneinander geschichtete Lagen von Stützelementen (13) aus einem faserhaltigen Naturwerkstoff, bevorzugt aus Sperrholz, Pappe, Karton oder Papier.

20. Verfahren nach Anspruch 19, **gekennzeichnet durch** Abdecken des Formeinsatzes (3) durch Aufspachteln einer Spachtelmasse oder Auflegen der Membran (5) auf die durch die Stirnseiten der aneinander angeordneten Stützelemente (13) gebildeten Oberseite erfolgt.
